# EUROPEAN PATENT SPECIFICATION

(11) **EP 4 062 253 B1**
(45) Date of publication and mention of the grant of the patent: **24.04.2024**
(21) Application number: 20864270.2
(22) Date of filing: 20.11.2020
(51) Int. Cl.: G05D 23/24

(54) **AN ENERGY STORAGE SYSTEM FOR STORING THERMAL ENERGY AND A CONTROLLER AND A METHOD FOR DETERMINING A TEMPERATURE IN THE ENERGY STORAGE SYSTEM**
ENERGIESPEICHERSYSTEM ZUM SPEICHERN VON THERMISCHER ENERGIE UND EINE STEUERUNG UND EIN VERFAHREN ZUM BESTIMMEN EINER TEMPERATUR IN DEM ENERGIESPEICHERSYSTEM
SYSTÈME D'ACCUMULATION D'ÉNERGIE PERMETTANT D'ACCUMULER DE L'ÉNERGIE THERMIQUE ET DISPOSITIF DE COMMANDE ET PROCÉDÉ DE DÉTERMINATION D'UNE TEMPÉRATURE DANS LE SYSTÈME D'ACCUMULATION D'ÉNERGIE

(30) Priority: 20.11.2019 EP 19000526; 20.11.2019 EP 19000530; 20.11.2019 EP 19000525
(43) Date of publication of application: 28.09.2022
(73) Proprietor: Iacovella, Sandro, 3600 Genk (BE)
(72) Inventor: Iacovella, Sandro, 3600 Genk (BE)
(86) International application number: PCT/EP2020/000197
(87) International publication number: WO 2021/104660

(56) References cited:
- EP-A1- 0 579 947
- WO-A1-2010/069356
- JP-A- H09 306 637

## Description

### Field of the invention

The invention relates to an energy storage system for storing thermal energy, the energy storage system comprising:
- a thermal energy storage,
- a heating element arranged to convert electrical energy supplied to the heating element into thermal energy to be stored in the thermal energy storage, and
- a controller for controlling the electrical energy supply to the heating element,

### Background of the invention

Such energy storage systems are commonly known as storage heaters for water and/or space heating,where electrical energy is supplied to a heating element situated in, or in thermal contact with the energy storage of the energy storage system. To keep these energy storage systems simple and reliable a thermostat is commonly used to control the amount of energy stored in the energy storage. The thermostat is effectively a binary switch with typically a hysteresis built in to the operation characteristics of the thermostat to prevent the switch from operating frequently. Although very reliable, such a simple thermostat has the disadvantage that it can only react to changes in the amount of stored energy by operating the switch if one of the thresholds is reached (i.e. de-energizing the switch when the upper threshold is reached and energizing the switch below the lower threshold). Alternatively to a thermostat the known energy storage systems can comprise a controller that measures the amount of stored energy using a sensor. Such a thermal sensor has a cost associated to it which is undesirable.

In addition, the thermal contact area of such a thermal sensor with the energy storage remains limited. Since energy storages exhibit a non-uniform temperature or energy distributions with the energy storage medium, this can result in inaccuracies relating to the estimation and regulation of the amount of stored energy. To overcome such inaccuracies, the energy storage system can be equipped with multiple temperature sensors in differing locations.

WO2010069356A1 discloses a heating unit for a vehicular fluid heater. The vehicular fluid heater comprises a heating element, a pulsewidth control switching unit which is connected to the heating element and a control unit which is connected to the switching unit and which produces a control signal within an adjustable pulsewidth. The pulsewidth of the control signal produced by the control unit depends on the actual temperature of the heating element, so that the control unit in combination with the switching unit limits the temperature of the heating unit to an adjustable target temperature.

EP0579947A1 discloses a washing machine having an electric resistance which is connectable to a power source , through a switch controlled by the programmer, to heat up a fluid contained in a wash tub. A measurement arrangement associated with the programmer includes a pair of terminals capable of detecting, across the heating resistance, signals that are proportional to the actual ohmic value of the resistance itself, and accordingly to its temperature. The measurement arrangement de-energizes the heating resistance when the signals detected at its terminals are indicative of a temperature of the resistance exceeding a predetermined value. It enables temperature measurement without using any thermostat.

JPH09306637A discloses that in order to conduct heat generation of a heating resistor arranged in a flow path of fluid at the prescribed temperature a low current insufficient for heating is continuously supplied to a heating resistor with a first electricity supply means, and high current sufficient for heating is intermittently supplied with a second electricity supply means. Immediately after electricity supply with the second electricity supply means is shut off, voltage across the heating resistor is measured with a voltage measuring means, and the resistance value and temperature of the heating resistor are detected during heating. Since the output current of the second electricity supply means is adjusted based on the detected results, the heating temperature of the heating resistor is controlled in the range of the prescribed temperature.

### Summary of the invention

It is the objective of this invention to provide an energy storage system that does not comprise a temperature sensor for determining the amount of stored energy, yet can still determine the amount of energy stored in the energy storage.

The invention is defined in the independent claims. Dependent claims define further embodiments. To achieve one or both of these objectives, the energy storage system according to the invention comprises a controller that is arranged to determine a temperature in the thermal energy storage by determining an electrical parameter of the heating element.

The heating element is in thermal contact with the storage medium, such as water, salt, bricks, ceramicsor sand. The heating element has electrical characteristics as it is arranged to convert electrical energy into thermal energy to be stored in the energy storage. These electrical characteristics change with a change of the temperature of the heating element. As the heating element is in thermal contact with the storage medium its electrical characteristics are at least partly determined by the temperature of the storage medium. The temperature of the storage medium can thus be determined by determining the electrical characteristic of the heating element.

This also provides a more accurate estimation of the amount of energy stored in the energy storage system, due to the increased thermal contact of area of the heating element with the energy storage medium, compared to that of one or multiple thermal sensors. This allows to take into account thermal stratification effects and non-uniform temperature distributions within the energy storage system.

In an embodiment the electrical parameter is a resistance of the heating element. The resistance of virtually every material changes with the temperature of the material. This change of resistance is a reliable indication of the change in temperature of the material. This way by measuring the resistance of the heating element the temperature of the energy storage can be determined.

According to the invention, the controller is arranged to determine the electrical parameter within a predetermined time period starting from a start of the electrical energy supply. As the heating element is a heating element it relies on raising its own temperature in order to transfer the generated heat to the energy storage. At the moment that the temperature of the heating element is raised it no longer represents the temperature of the energy storage. As such, by measuring the resistance at the very start of the application of the electrical energy to the heating element, the temperature of the heating element has not been raised yet and the heating element temperature equals the temperature of the energy storage it is supposed to heat. Thus, by measuring the resistance of the heating element within a predetermined time period starting from a start of the electrical energy supply a valid measurement of the temperature of the energy storage is obtained. As the measurement is after the start of the supply of electrical energy no additional circuitry is required to supply a measuring current. The current of the supplied electrical energy serves as measuring current.

According to the invention, the time period is shorter than a thermal constant of the heating element.

As the electrical current supplied to the heating element heats up the element and as the heating element's material has a thermal constant, i.e. a time needed before the heating takes effect, limiting the measuring period to a period shorter than the thermal constant ensures that the temperature measurement thus performed is an accurate representation of the temperature of the energy storage and thus of the amount of energy stored in the energy storage.

In yet another unclaimed embodiment of the energy storage system the controller is arranged to determine the electrical parameter within a predetermined time period ending at a start of the electrical energy supply. By shifting the measurement to a period before the supply of electrical energy any temperature increase due to the heating of the heating element by the electrical energy applied is avoided. The measurement can be performed with a special low energy measurement current/signal or by supplying the regular electrical energy to the heating element for a very short time. This allows the measurement to be performed without heating the heating element.

In another unclaimed embodiment the controller is arranged to determine the electrical parameter after a predetermined time period starting at an end of the electrical energy supply. Another suitable moment to perform the measurement of the electrical characteristic is after a predetermined time period after the end of the electrical energy supply to the heating element. This predetermined time period ensures that after having been heated the heating element is cooled back down to the temperature of the medium in the energy storage. At that moment the measurement of the electrical characteristic will represent the temperature of the storage medium.

A controller according to the invention is characterized in that the controller is arranged to determine a temperature in the thermal energy storage by determining an electrical parameter of the heating element.

The heating element is in thermal contact with the storage medium, such as water, salt, bricks, ceramics or sand. The heating element has electrical characteristics as it is arranged to convert electrical energy into thermal energy to be stored in the energy storage. These electrical characteristics change with a change of the temperature of the heating element. As the heating element is in thermal contact with the storage medium its electrical characteristics are at least partly determined by the temperature of the storage medium. The temperature of the storage medium can thus be determined by determining the electrical characteristic of the heating element.

In an embodiment of the controller the electrical parameter is a resistance of the heating element.

The resistance of virtually every material changes with the temperature of the material. This change of resistance is a reliable indication of the change in temperature of the material. This way by measuring the resistance of the heating element the temperature of the energy storage can be determined.

According to the invention, the controller is arranged to determine the electrical parameter within a predetermined time period starting from a start of the electrical energy supply.

As the heating element is a heating element it relies on raising its own temperature in order to transfer the generated heat to the energy storage. At the moment that the temperature of the heating element is raised it no longer represents the temperature of the energy storage. As such, by measuring the resistance at the very start of the application of the electrical energy to the heating element, the temperature of the heating element has not been raised yet and the heating element temperature equals the temperature of the energy storage it is supposed to heat. Thus, by measuring the resistance of the heating element within a predetermined time period starting from a start of the electrical energy supply a valid measurement of the temperature of the energy storage is obtained. As the measurement is after the start of the supply of electrical energy no additional circuitry is required to supply a measuring current. The current of the supplied electrical energy serves as measuring current.

According to the invention, the time period is shorter than a thermal constant of the heating element. As the electrical current supplied to the heating element heats up the element and as the heating element's material has a thermal constant, i.e. a time needed before the heating takes effect, limiting the measuring period to a period shorter than the thermal constant ensures that the temperature measurement thus performed is an accurate representation of the temperature of the energy storage and thus of the amount of energy stored in the energy storage.

In yet another unclaimed embodiment the controller is arranged to determine the electrical parameter within a predetermined time period ending at a start of the electrical energy supply. By shifting the measurement to a period before the supply of electrical energy any temperature increase due to the heating of the heating element by the electrical energy applied is avoided. The measurement can be performed with a special low energy measurement current/signal or by supplying the regular electrical energy to the heating element for a very short time. This allows the measurement to be performed without heating the heating element.

In a further unclaimed embodiment of the controller the controller is arranged to determine the electrical parameter after a predetermined time period starting at an end of the electrical energy supply.

Another suitable moment to perform the measurement of the electrical characteristic is after a predetermined time period after the end of the electrical energy supply to the heating element. This predetermined time period ensures that after having been heated the heating element is cooled back down to the temperature of the medium in the energy storage. At that moment the measurement of the electrical characteristic will represent the temperature of the storage medium.

A method for determining a temperature of a medium storing thermal energy comprises the steps of:
- converting electrical energy received from an electrical energy supply into thermal energy to be stored in the medium using an electrical heater,
- controlling the electrical energy supply to the heating element,
characterized in that the method further comprises the steps of deriving a temperature in the medium from an electrical parameter of the heating element, wherein the controller is arranged to determine the electrical parameter within a predetermined time period starting from a start of the electrical energy supply and in that the time period is shorter than a thermal material constant of the heating element.

### BRIEF DESCRIPTION OF THE DRAWINGS

Figure 1 shows an energy storage system according to the invention.
Figure 2 show the variation of electrical resistance in response to the periodic heating of the heating element.
Figure 3 show the variation of electrical resistance in response to the periodic heating of the heating element.
Figure 4 shows the variation of electrical resistance and applied electrical energy in response to an energy drawl , to maintain the energy storage vessel at the desired temperature
Figure 5: shows a resistance-based controller with increased operating energy efficiency. First, a periodic electrical energy pulse is used to maintain the temperature at a reduced temperature *t^{backup}* ± *t^{db}.*
Figure 6 shows an enlarged section of figure 5

### DETAILED DESCRIPTION OF EMBODIMENTS

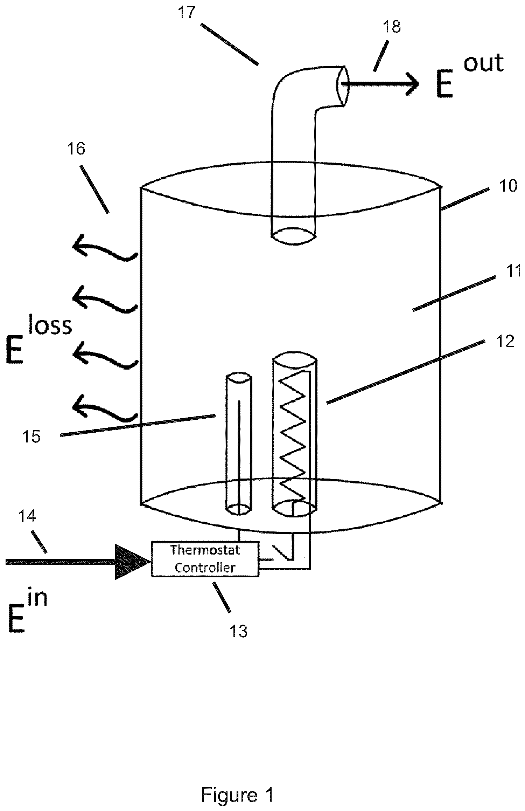

### Figure 1 shows an energy storage system according to the prior art

The energy storage system 10 comprises an energy storage 11 which in turn comprises a energy storage medium. In order to increase the amount of energy stored in the medium the energy storage system 10 comprises a heating element 12. This heating element 12, when supplied with electrical energy (*Eⁱⁿ*) 14 will increase in temperature and thus heat the medium in the energy storage 11. The supply of electrical energy 14 to the heating element 12 is controlled by a controller 13. A sensor 15 is provided to allow the controller to measure a temperature in the energy storage 11 so as to allow the controller to maintain the temperature of the medium in the energy storage 11 at a certain level, with a predetermined tolerance, or in the case the sensor 15 and controller 13 are implemented as a traditional thermostat, maintain the energy level in the medium above a minimum level.

The energy storage system 10 has energy losses (*E^{loss}*) 16 where the energy is lost to the environment The energy storage system 10 further comprises an energy output 17 for extracting output energy (*E^{out}*) 18 from the energy storage 11 A controller 15 typically has a hysteresis which ensures that the controller 13 maintains a stored quantity of energy in the energy storage 11 between a first limit and a second limit, where the first limit is lower than the second limit, by supplying input energy 14 from the energy input to the energy storage 11 during an energy supply period.

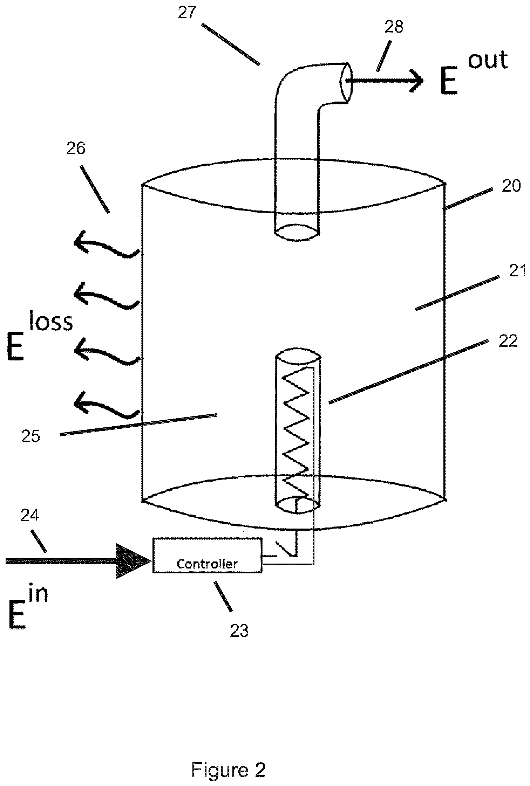

### Figure 2 shows an energy storage system according to the invention

The energy storage system 20 comprises an energy storage 21 which in turn comprises a energy storage medium. In order to increase the amount of energy stored in the medium the energy storage system 20 comprises a heating element 22. This heating element 22, when supplied with electrical energy (*Eⁱⁿ*) 24 will increase in temperature and thus heat the medium in the energy storage 21. The supply of electrical energy 24 to the heating element 22 is controlled by a controller 23. The energy storage system according to the invention however does not comprise a sensor to measure a temperature in the energy storage 21. Instead the controller uses the heating element 22 to determine the temperature of the medium in the energy storage. This is possible because when no electrical energy is supplied to the heating element 22 the heating element's temperature will revert back to the temperature of the medium. The material that the heating element has been made off has resistance that exhibits a relationship to the temperature of the material. As the heating element material reverts back to the temperature when no (or a very low) electrical energy is supplied the resistance of the heating element 22 can be used to derive the temperature of the medium in the energy storage 21. This allows the controller according to the invention to maintain the temperature of the medium in the energy storage 21 without the use of a thermostat or temperature sensor in contact with the medium.

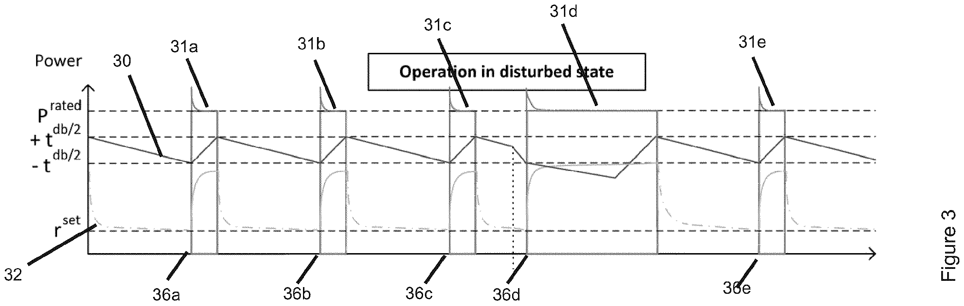

In figure 3 three graphs are combined to show the temporal relationship between the graphs.

Figure 3 shows the temperature 30, the electrical energy supply 31 and the resistance 32 of the heating element as a function of time (horizontal axis).

As can be seen, during energy supply period 31a...31e electrical energy is supplied to the energy storage system. In the example given it is an on-off control form of energy control where either no energy is supplied inbetween the energy supply periods 31a....31e and energy is supplied at the level of the rated power of the energy storage system, in particular of the heating element of the energy storage system.

The curve of the temperature 30 of the medium in the energy storage slowly decreases when no energy is supplied to the heating element and rises during the energy supply periods 31a...31e.

The resistance curve 32 shows the change in resistance of the heating element both when energy is supplied and in the periods when no energy is supplied. In the energy supply periods the resistance quickly and quite significantly increases as the heating element's temperature rises in response to the supplied energy. When energy is no longer supplied the temperature of the heating element will revert back to the temperature of the medium with which the heating element is in contact. As can be seen after some time the resistance stabilizes and a determinationat that time of the resistance of the heating element will allow the temperature of the medium to be determined, derived from the resistance as the temperature coefficient of the material of the heating element is known.

The electric resistance 32 of the heating element can also be determined at the start of every heating sequence and used to determine the temperature 30 of the surrounding energy storage of the storage system, and thus the amount of energy stored in the energy storage system. As can be seen in figure 3, the temperature of the energy storage system oscillates between the threshold temperatures *t^{set}- t*^{*db*/2} and *t^{set}*+ *t*^{*db*/2}*.* Figure 3 also illustrates that at the beginning 36a...36e of every electrical energy supply period31a...31e, the resistance 32 of the heating element is determined by the energy storage temperature of the storage system because it takes the heating element some time before the temperature increases and thus also the resistance of the heating element increases. Thus, at this point in time the temperature of the heating element is still at the temperature of the medium rather than at the operating temperature of the heating element when heated. The beginning 36a ... 36e of the energy supply period is thus a suitable moment to measure the resistance. The resistance then rapidly increases which decreases the power consumption of the heating element. The resistance value of the heating element is depicted in the dotted curve 32, whereby a solid section of the curve 32 indicates the resistance during the period during which electrical energy is supplied and the dotted sections of the curve indicate the resistance during the periods during which no electrical energy is supplied and the resistance of the heating element converges back to the surrounding energy storage system temperature. In such a converging back period 32a the temperature of the heating element can also be determined, either by a very short pulse of electrical energy supply, or another low energy current originating from the measuring circuit of the controller. Also, as it takes some time to revert back, one would normally have to wait for the resistance value to stabilize to determine the temperature of the medium. It is however also possible, knowing for instance the mass of the medium and the thermal characteristics of the heating element to derive the temperature of the medium during the decline of the resistance of the heating element as the change in time is a characteristic of the energy storage system. This allows the determination of the temperature of the medium to take place also shortly after the energy supply period ends.

As the temperature of the medium can be determined in between the energy supply periods or even at the start of the energy supply period, the controller can determine whether energy has been drawn from the energy storage. As can be seen, when no energy is drawn from the energy storage there are relatively short energy supply periods in which the controller supplies the energy supply to the heating element. This also forms a regular pattern as the losses from the energy storage determine when energy is needed from the energy supply in order to compensate the energy lost due too imperfect insulation. In figure 3 the user however draws energy from the energy storage which causes the controller to, in this example, not only start supplying electrical energy earlier than expected but the energy supply period 31d also has a longer duration than the pulses needed to compensate the energy losses due to imperfect insulation. The controller thus is able to identify the point in time the user draws energy from the energy storage but also has an indication of the amount of energy drawn as this is directly related to the duration of this energy supply period 31d.

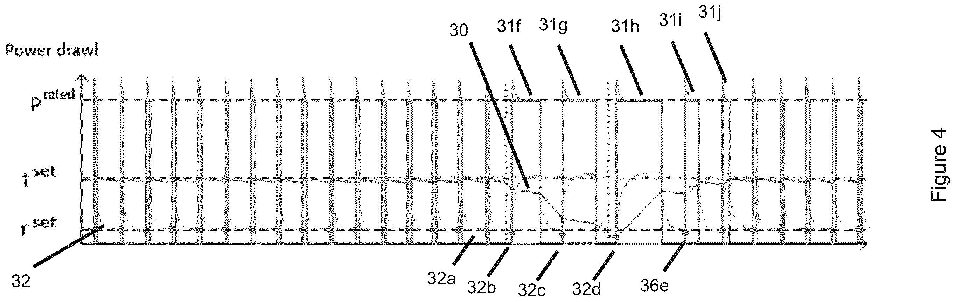

Figure 4 shows the variation of electrical resistance and applied electrical energy in response to an energy drawl, to maintain the energy storage vessel at the desired temperature.

The state-of-charge can be controlled without employing an estimator for forecasted energy withdrawal patterns. Here, a controller (eg. P/PI/PID) is used to supply an energy sequence whereby the duration of the energy sequence is related to the measured deviation from the desired resistance value R^{set} which is the resistance at the set temperature of the energy storage. As shown by the dots 32a, 32b, 32c, 32d on the curve of the heating element resistance at the start of the application of the electrical energy supply, the measurements occur at relevant temperatures to allow the controller to effectively control the temperature to return to the desired temperature band around T^{set}. As shown when the resistance value 32a is at R^{set} a normal delay and a normal duration of electrical energy supply follows. However, when the user draws energy from the energy storage the controller determines a resistance 32b of the heating element below R^{set}, which leads to the application of electrical energy 31f with a longer duration. In the example, the user continues to draw energy from the energy storage, witness by a continued drop in temperature 30 of the medium in the energy storage.The next time the controller determines the resistance 32c it is even further below R^{set} after which the controller applies an even longer energy supply in order to compensate for the energy lost through the drawl by the user. However, as the user continues to draw energy, the temperature further drops, resulting in a low resistance 32d to which the controller responds with an extended energy supply period 31h. The controller stops supplying energy at the end of energy supply period 31h, waits for the heating element to conform to the temperature of the medium and determines the resistance 32e. This resistance 32e is closer to R^{set} as the user stopped drawing energy and the energy supply in energy supply period 31h has almost returned the temperature to T^{set}. The controller now applies a still extended energy supply period 31i which however can be shorter than the previous energy supply period 31h. This repeats one more time in figure 4 before the temperature has reached T^{set} (and the heating element's resistance has reached R^{set}) again and the normal low duty cycle energy supply period pattern returns in which just the system energy losses due to imperfect insulation are compensated.

In a more advanced embodiment, this steering logic can be used to maintain the temperature at a reduced energy, energy efficient state, to steer the appliance in case of unforecasted energy drawls. The energy consumed during the entire time segment between two consecutive T^{set'}s, can be considered the observed drawl. Such a forecasting steering controller is arranged to steer based on resistance measurement, but having a target temperature Tset that is reduced to save energy, using preheating using an extended heating period, based on a forecasted drawl energy that the controller learned earlier in time based on behavior patterns of the user with regard to energy drawl from the energy storage.

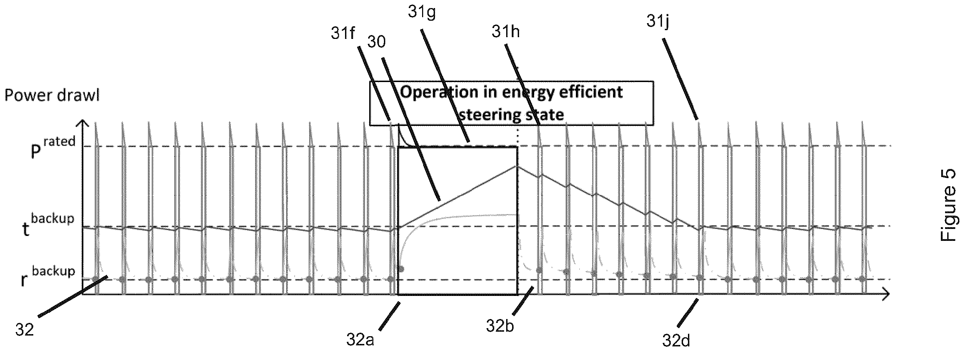

Figure 5: shows a resistance-based controller with increased operating energy efficiency.

First, a periodic electrical energy pulse is used to maintain the temperature at a reduced temperature *t^{backup}* ± *t^{db}.* When energy drawls are expected, the energy storage system is preheated with an extended periods of applied electrical energy supply, proportional to the forecasted energy drawl such that at the moment of forecasted energy drawl the medium in the energy storage is at Tset instead of Tbackup.

When operating in energy efficient state, a periodic electrical energy pulse is applied with an off-period longer (to maintain a certain comfort/energy margin) or equal (when maximising energy savings) to the time it takes for the resistance value to return to the value at a temperature equal to that of the surrounding energy storage medium in the energy storage. Of course other instances can be used to measure the resistance of the heating element as previously described, such as at the beginning of an energy supply period when the heating element has not reached its operating temperature but is, due to time lag, still at the temperature of the medium, or during the heating element temperature decay period following an energy supply period during which a heating element temperature decay model can used to derive the temperature of the medium from the heating element resistance decay curve. The latter is possible because the thermal mass of the energy storage medium is typically constant and the resistance decay curve is thus only dependent on the temperature of the medium. Also, the step response of the resistance (rise time, settling time) can be used to derive a more accurate temperature measurement from the resistance curve during a energy supply period.

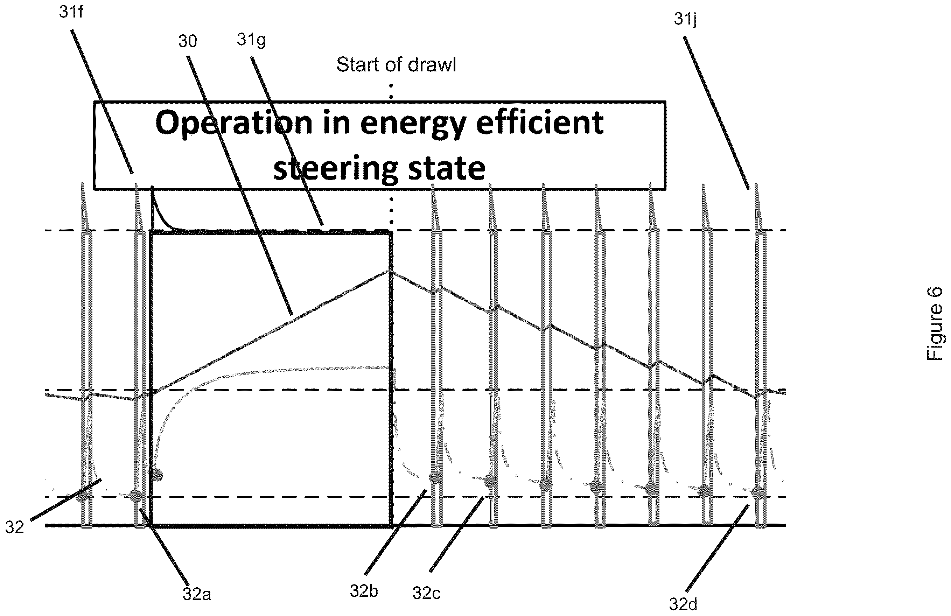

### Figure 6 shows an enlarged section of figure 5

In figure 6 the resistance of the heating element is measured at the start of each energy supply period, as indicated by a dot, from which resistance subsequently the temperature of the storage medium is derived. This periodical activation sequence is used to estimate and maintain the resistance of the heating element at a value of R^{set}, corresponding to a temperature setpoint T^{set}.

As shown when the resistance value 32a is at R^{set} a normal delay and a normal duration of electrical energy 31f supply follows. However, when it is forecasted the user will draw energy from the energy storage the controller applies the forecasted electrical energy drawl 31g with extended duration. Following the actual forecasted drawl (dotted line), the controller (eg. P/PI/PID) from the previous embodiment is put in operation again to measure the resistance at periodic intervals to account for potential unforeseen drawls. Brief excitation pulses as governed by the eg. P/PI/PID logic result in a duty cycle energy supply pattern that reduces the state-of-charge of the energy storage untill reaching resistance 32d. At this point, a normal low duty cycle energy supply period pattern is applied in which just the system energy losses due to imperfect insulation are compensated.

When a user drawl is expected (as learned from the pattern of energy drawls in the past) the controller will thus increase the temperature of the energy storage medium required to satisfy the energy drawl without allowing the temperature of the medium at the end of the drawl to drop below a desired temperature, for instance T^{set} or T^{backup}

This allows the control of the energy storage in the energy storage system at a comfort-satisfying temperature.

As the controller can learn the pattern of energy drawls from the periodic measurements of the resistance of the heating element and can derive the amounts of energy drawn during these drawls from the energy supply durations needed to bring the medium back up to the desired temperature, a separate temperature sensor is no longer needed, increasing the reliability of the system while maintaining the comfort level for the user. Also energy savings are achieved as the medium can be kept at a lower temperature for periods when no drawl is expected and thus the temperature delta to the surroundings minimized, leading to reduced losses. In addition, as a typical heating element has a considerable size and thus extends further into the medium in order to efficiently transfer the energy from the heating element to the medium, the resistance measurement also represents a larger portion of the medium in the energy storage, contrary to the point measurement as offered by the typical sensor. As shown in figure 1 and 2 the heating element is often elongated and placed in the energy storage in a vertical position. This enhances energy transfer but also means that the resistance measurement of the heating element represents multiple stratified layers in the energy storage, thus giving a better estimate of the average temperature of the medium since the heating element is less of a local-measurement and has a more elongated contact area with the surrounding energy storage system. The measurement is thus less prone to thermal stratification, mixing and/or temperature hot-spot phenomena.

This measurement allows the accurate measurement of user withdrawal of energy from the energy storage system and thus allows in the prediction of future energy consumption by the user from the energy storage system.

## Claims

1. An energy storage system (10) for storing thermal energy, the energy storage system comprising:
- a thermal energy storage (11),
- a heating element (12) arranged to convert electrical energy supplied to the heating element (12) into thermal energy to be stored in the thermal energy storage (11), and
- a controller (13,19) for controlling an electrical energy supply to periodically heat the heating element (12),
where the controller (13,19) is arranged to determine a temperature in the thermal energy storage (11) by determining an electrical parameter of the heating element (12)
**characterized in that** the controller 13,19) is arranged to determine the electrical parameter within a predetermined time period starting from a start of the electrical energy supply and **in that** the time period is shorter than a thermal material constant of the heating element.

2. An energy storage system (10) as claimed in claim 1,
where the electrical parameter is a resistance of the heating element (12).

3. A controller (13,19) for use in the energy storage system of claim 1.

4. A controller (13,19) as claimed in claim 3,
where the electrical parameter is a resistance of the heating element (12).

5. A method for determining a temperature of a medium storing thermal energy, the method comprising the steps of:
- converting electrical energy received from an electrical energy supply into thermal energy to be stored in the medium using an electrical heater (12),
- controlling the electrical energy supply to periodically heat the heating element (12),
wherein the method further comprises the steps of deriving a temperature in the medium from an electrical parameter of the heating element (12), **characterized in that** the electrical parameter is determined within a predetermined time period starting from a start of the electrical energy supply and **in that** the time period is shorter than a thermal constant of the heating element (12).

6. A method as claimed in claim 5,
where the electrical parameter is a resistance of the heating element (12).

## Patentansprüche

1. Ein Energiespeichersystem zur Speicherung thermischer Energie, wobei das Energiespeichersystem Folgendes umfasst:
- ein thermischer Energiespeicher,
- ein Heizelement, das so angeordnet ist, dass es die dem Heizelement zugeführte elektrische Energie in Wärmeenergie umwandelt die im Wärmeenergiespeicher gespeichert werden soll, und
- eine Steuerung zur Steuerung einer elektrischen Energiezufuhr zum zeitweise heizen des Heizelement, wobei die Steuerung dazu eingerichtet ist, durch Bestimmung eines elektrischen Parameters des Heizelements eine Temperatur im thermischen Energiespeicher zu bestimmen, **dadurch gekennzeichnet dass** die Steuerung so angeordnet ist, dass sie den elektrischen Parameter innerhalb einer vorgegebenen Zeitspanne ab Beginn der elektrischen Energieversorgung bestimmt und die Zeitspanne kürzer ist als eine thermische Materialkonstante des Heizelements.

2. Energiespeichersystem nach Anspruch 1, wobei der elektrische Parameter ein Widerstand des Heizelements ist.

3. Eine Steuerung zur Anwendung in ein Energiespeichersystem nach Anspruch 1.

4. Eine Steuerung nach Anspruch 3, wobei der elektrische Parameter ein Widerstand des Heizelements ist.

5. Verfahren zur Bestimmung der Temperatur eines Mediums, das Wärmeenergie speichert, wobei das Verfahren die folgenden Schritte umfasst:
- Umwandeln der von einer elektrischen Energieversorgung empfangenen elektrischen Energie in im Medium zu speichernde Wärmeenergie mithilfe einer elektrischen Heizung,
- Steuern der elektrischen Energiezufuhr zum zeitweise heizen des Heizelement, wobei das Verfahren weiterhin die Schritte des Ableitens einer Temperatur im Medium aus einem elektrischen Parameter des Heizelements umfasst, **dadurch gekennzeichnet dass** der elektrische Parameter innerhalb einer vorgegebenen Zeitspanne ab Beginn der elektrischen Energieversorgung bestimmt wird wobei der Zeitraum kürzer ist als eine thermische Konstante des Heizelements.

6. Verfahren nach Anspruch 5, wobei der elektrische Parameter ein Widerstand des Heizelements ist.

## Revendications

1. Système de stockage d'énergie pour stocker de l'énergie thermique, le système de stockage d'énergie comprenant:
- un stockage d'énergie thermique,
- un élément chauffant agencé pour convertir l'énergie électrique fournie à l'élément chauffant en énergie thermique à stocker dans le stockage d'énergie thermique, et
- un contrôleur pour contrôler une alimentation en énergie électrique pour chauffer périodiquement l'élément chauffant, dans lequel le contrôleur est agencé pour déterminer une température dans le stockage d'énergie thermique en déterminant un paramètre électrique de l'élément chauffant, **caractérisé en ce que** le contrôleur est agencé pour déterminer le paramètre électrique dans une période de temps prédéterminée commençant à partir du début de l'alimentation en énergie électrique et la période de temps est plus courte qu'une constante matérielle thermique de l'élément chauffant.

2. Système de stockage d'énergie selon la revendication 1, dans lequel le paramètre électrique est une résistance de l'élément chauffant.

3. Contrôleur pour application dans un système de stockage d'énergie selon la revendication 1.

4. Contrôleur selon la revendication 3, dans lequel le paramètre électrique est une résistance de l'élément chauffant.

5. Procédé pour déterminer une température d'un milieu stockant de l'énergie thermique, le procédé comprenant les étapes suivantes :
- convertir l'énergie électrique reçue d'une alimentation en énergie électrique en énergie thermique à stocker dans le milieu à l'aide d'un radiateur électrique,
- contrôler l'alimentation en énergie électrique pour chauffer périodiquement l'élément chauffant, dans lequel le procédé comprend en outre les étapes consistant à dériver une température dans le milieu à partir d'un paramètre électrique de l'élément chauffant, **caractérisé en ce que** le paramètre électrique est déterminé dans une période de temps prédéterminée commençant à partir du début de l'alimentation en énergie électrique et la période de temps est plus courte qu'une constante thermique de l'élément chauffant.

6. Procédé selon la revendication 5, dans lequel le paramètre électrique est une résistance de l'élément chauffant.
